# EUROPEAN PATENT SPECIFICATION

(11) **EP 1 830 515 B1**
(45) Date of publication and mention of the grant of the patent: **22.09.2010**
(21) Application number: 05817779.1
(22) Date of filing: 05.12.2005
(51) Int. Cl.: H04L 12/24

(54) **A METHOD FOR TRANSFERRING THE NETWORK MANAGEMENT CONFIGURATION INFORMATION BETWEEN THE ELEMENT MANAGEMENT SYSTEMS**
VERFAHREN ZUM TRANSFER DER NETZWERKVERWALTUNGS-KONFIGURATIONSINFORMATIONEN ZWISCHEN DEN ELEMENTVERWALTUNGSSYSTEMEN
PROCEDE PERMETTANT DE TRANSFERER DES INFORMATIONS DE CONFIGURATION ET DE GESTION DE RESEAU ENTRE DES SYSTEMES DE GESTION DES ELEMENTS

(30) Priority: 06.12.2004 CN 200410096936
(43) Date of publication of application: 05.09.2007
(73) Proprietor: Huawei Technologies Co., Ltd., Longgang District, Shenzhen Guangdong 518129 (CN)
(72) Inventor: YANG, Li, 518129 Shenzhen Guangdong (CN)
(74) Representative: Körber, Martin Hans
(86) International application number: PCT/CN2005/002091
(87) International publication number: WO 2006/060952

(56) References cited:
- WO-A-01/82078
- GB-A- 2 328 351
- KR-A- 2004 049 730
- KR-A- 2004 051 928
- KR-A- 2004 052 061
- US-A1- 2003 229 686
- US-A1- 2004 031 030

## Description

### Field of the Invention

The present invention relates to network element management technologies in mobile communication networks, and particularly, to a method and a device for exchanging network management configuration information between element management systems.

### Background of the Invention

In the management architecture of 3rd Generation (3G) mobile communication network, the managed devices at the bottom layer are different network elements, e.g, a Radio Network Controller (RNC), a Base Station (Node B), etc.; the middle layer includes an Element Management System (EMS), and generally in the network of an operator, a group of network elements made by one manufacturer share one EMS and each EMS and the network elements managed by the EMS form a sub-network; the top layer includes a Network Management System (NMS) which usually belongs to one operator and manages a number of sub-networks. The NMS and the EMSs exchange the network management configuration information to each other through communication interfaces.

The sub-networks in the mobile communication network are not separate from each other, but are respectively configured with network management configuration information corresponding to each other, i.e. related configuration information, which is referred to as border configuration information in this disclosure; and the EMS of any sub-network manages the border configuration information of the sub-network.

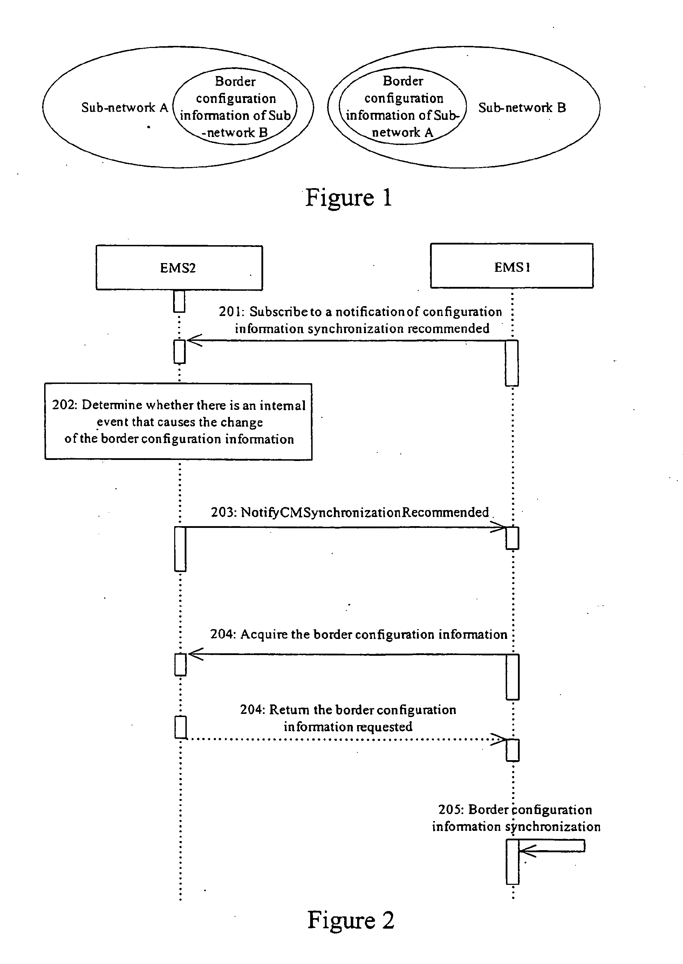

Figure 1 is a schematic diagram illustrating the structure of a network in which each of different sub-networks is configured with border configuration information. As shown in Figure 1, two sub-networks related to each other, i.e. Sub-network A and Sub-network B, need a part of the border configuration information from each other, in other words, Sub-network A has the border configuration information of Sub-network B, and Sub-network B has the border configuration information of Sub-network A. For example, when the two sub-networks are both access networks, if Cell M of Sub-network A and Cell N of Sub-network B are two neighboring cells, Sub-network A needs the border configuration information of Cell N from Sub-network B while Sub-network B needs the border configuration information of Cell M from Sub-network A, thus a terminal user may switch between the two sub-networks. For another example, when one of the two sub-networks is a core network and the other is an access network, both of the two sub-networks need the configuration information of an Iu-cs interface link connecting an MSC server to the RNC or BSC and an Iu-ps interface link connecting an SGSN to the RNC or BSC (i.e. the IucsLink and IupsLink) between the two sub-networks; if Sub-network A modifies the configuration of either link, Sub-network B should modify the configuration of the same link to assure the normal interaction between the two sub-networks.

Border configuration information of related sub-networks should correspond to each other, i.e. should comply with a "mapping" relation as referred to herein, in other words, the border configuration information of related sub-networks should comply with a predetermined function relation. When the border configuration information of a sub-network is modified, corresponding border configuration information in a related sub-network should be also modified according to the predetermined function relation so that the related border configuration information of the two sub-networks always comply with the predetermined function relation to assure that the network functions normally. The modification process is referred to as synchronization herein.

In the field of 3G network management, 3GPP has already defined the technical specifications of the standard communication interface between the NMS and the EMS. The standard communication interface is a northbound interface Itf-N. Through the Itf-N, the NMS sends a management instruction to the EMS, and the EMS sends network management configuration information including network internal event reports to the NMS. Thus the 3G network management is implemented.

However, there is no method for exchanging network management configuration information between EMSs in the industry yet. As a result, when the border configuration information in the EMS of a sub-network is changed, the EMS of a related sub-network can not automatically learn this change. Thus the EMS of the related sub-network can neither automatically acquire the changed border configuration information nor perform automatic synchronization of border configuration information. Therefore manual operation is required in the conventional synchronization of the border configuration information between EMSs, i.e., the changed border configuration information of a sub-network is recorded and then inputted into the EMS of a related sub-network so that the EMS of the related sub-network may synchronize the border configuration information. Such operation is hardly automatic and wastes human and system resources.

A proposal in the prior art suggests that the NMS assists EMSs with synchronization of the border configuration information, however, since the NMS usually can not parse the border configuration information and can hardly screen out the border configuration information needed to send to all related EMSs, thus there is no mature product of the proposal in the industry.

US 2004/0031030 A1 discloses a method and apparatus for facilitating hot upgrades of software components within a telecommunications network device through the use of "signatures" generated by a signature release within the network device. More particularly, it discloses tiered validation of configuration data in which NMS client validates configuration date received from an administrator, and the NMS server and network device re-validate received configuration data respectively. In other words, it provides the synchronization between management system and managed network device.

WO 01/82078 A discloses a method and apparatus for maintaining the integrity of configuration data in redundant fault tolerant network appliances. The appliances interact with one another to detect a failure in one appliance and instantly transition operations form the failed appliance to a functional appliance; further, the configuration data of the network appliances is distributed and stored in a redundant manner in storage system that is accessible to the network appliances.

### Summary of the Invention

Embodiments of the present invention provide a method and a device for exchanging network management configuration information between Element Management Systems (EMS) so that network management configuration information can be exchanged and synchronized automatically between EMSs.

A method for exchanging network management configuration information between Element Management Systems (EMSs) includes:
acquiring, by a first sub-network EMS, network management configuration information of a second sub-network EMS related to the first sub-network EMS sent by the second sub-network EMS after the network management configuration information of the second sub-network EMS is changed;
synchronizing, by the first sub-network EMS, corresponding network management configuration information in the first sub-network EMS according to the network management configuration information of the second sub-network EMS upon receiving the network management configuration information of the second sub-network EMS.

Preferably, the method further includes: learning, by the first sub-network EMS, whether the network management configuration information of the second sub-network EMS is changed, and initiating a request for acquiring specified network management configuration information to the second sub-network EMS if the network management configuration information of the second sub-network EMS is changed; and
the procedure of acquiring includes: acquiring the specified network management configuration information.

Or, the method further includes:
determining, by the second sub-network EMS, whether the network management configuration information of the second sub-network EMS is changed, and
sending the network management configuration information of the second sub-network EMS if the network management configuration information of the second sub-network EMS is changed.

A device in an Element Management System (EMS) of a sub-network for exchanging network management configuration information includes:
a first module for acquiring network management configuration information of an EMS of a related sub-network after the network management configuration information of the EMS of the related sub-network is changed; and
a second module for synchronizing corresponding network management configuration information of the EMS of the sub-network according to the network management configuration information of the EMS of the related sub-network.

According to the embodiments of the present invention, the automatic transmission of network management configuration information and the automatic border configuration information synchronization between EMSs can be implemented, therefore the correct mapping of border configuration information in all related sub-networks may be maintained in time, and the normal operation of the communication network may be assured.

Because the automatic direct transmission of network management configuration information between EMSs is realized without the participation of the NMS, when there is no NMS, or when the NMS is unable to assist the EMSs with the network management configuration information exchange between the EMSs, the transmission of the configuration information can be performed automatically on the EMS layer. Compared with NMS manufacturers, EMS manufacturers know better about which network management configuration information is needed to be exchanged between the EMSs, the meaning of the network management configuration information exchanged and the influence thereof on the devices in network.

Since the network management configuration information is exchanged directly between the EMSs, the EMS manufacturers are able to set optimized network management configuration information directly in the EMSs so as to improve the management efficiency of the whole network. Furthermore, as the network management configuration information is directly exchanged between the EMSs without the participation of the NMS, the intermediate media of the transmission is reduced and the management speed and reliability are improved.

### Brief Description of the Drawings

Figure 1 is a schematic diagram illustrating the structure of a network in which each of different sub-networks is configured with border configuration information.
Figure 2 is a flow chart of the process in which the local sub-network EMS actively acquires the border configuration information and synchronizes the border configuration information in the local sub-network EMS according to an embodiment of the present invention.
Figure 3 is a flow chart of the process in which the local sub-network EMS actively acquires the border configuration information and synchronizes the border configuration information in the local sub-network EMS according to an embodiment of the present invention.
Figure 4 is a flow chart of the process in which the local sub-network EMS passively receives the border configuration information and synchronizes the border configuration information in the local sub-network EMS according to an embodiment of the present invention.
Figure 5 is a schematic diagram illustrating the 3GPP IRP operation in the embodiments above.

### Detailed Description of the Invention

Embodiments of the present invention are described in detail with reference to accompanying drawings.

The network management configuration information exchanged between the EMSs may be any configuration information, and border configuration information is taken as an example in the description.

In the method for exchanging border configuration information between EMSs in accordance with embodiments of the present invention, the border configuration information may be acquired actively or be received passively.

The manner of acquiring the border configuration information actively is also referred to as "pull" mode.

In the "pull" mode, upon receiving a notification of "network management configuration information synchronization recommended" from a related sub-network EMS of a local sub-network EMS, or upon detecting that the border configuration information of an entity of the related sub-network is incorrect in the local sub-network EMS, the local sub-network EMS actively initiates a request to acquire specified border configuration information from the related sub-network EMS, and the related sub-network EMS replies to the local sub-network EMS with the specified border configuration information.

Upon acquiring the specified border configuration information of the related sub-network EMS, the local sub-network EMS synchronizes the corresponding border configuration information in the local sub-network EMS according to a function relation between the border configuration information of the related sub-network EMS and the corresponding border configuration information in the local sub-network EMS, i.e. the border configuration information of the related sub-network EMS in the local sub-network EMS.

The manner of passively acquiring the border configuration information is referred to as "push" mode.

In the "push" mode, the related sub-network EMS of the local sub-network EMS sends, when its border configuration information is changed, the changed border configuration information to the local sub-network EMS.

Upon receiving the changed border configuration information, the local sub-network EMS synchronizes corresponding border configuration information in the local sub-network EMS according to the function relation between the border configuration information of the related sub-network EMS and the corresponding border configuration information in the local sub-network EMS.

In the process above, either dedicated interface operations newly-defined or existing interface operations can be adopted. The operations of 3GPP northbound interface are adopted in the embodiments of the present invention to further illustrate the technical scheme of the present invention.

An EMS may directly invoke the operations of the 3GPP northbound interface to perform configuration information exchange between the EMSs. However, unlike the prior art, the two parties of the operations are not an EMS and an NMS, but two EMSs.

According to an embodiment of the present invention, the local sub-network EMS actively acquires the border configuration information of the related sub-network EMS and synchronizes the corresponding border configuration information in the local sub-network EMS.

Figure 2 is a flow chart of the process in which the local sub-network EMS actively acquires the border configuration information and synchronizes the border configuration information in the local sub-network EMS according to an embodiment of the present invention. As shown in Figure 2, EMS1 is the local sub-network EMS, EMS2 is an EMS which has corresponding border configuration information of EMS1, and the border configuration information between EMS1 and EMS2 can be configured in advance. The process as shown in Figure 2 is described below.

In Step 201, EMS 1 subscribes at EMS2 to a notification of configuration information synchronization recommended.

Step 201 is the basis of Step 202. The subscription means that an EMS requires another EMS to send a notification to it upon a certain event, e.g., the local sub-network EMS may subscribe to a notification of object creation event at a peer EMS, and the peer EMS sends the notification of the object creation event to the local sub-network EMS upon the successful creation of an object.

In this embodiment, the Subscription operation of the Notification Integration Reference Point (IRP) of the 3GPP northbound interface is adopted in Step 201, and unlike the specifications of 3GPP, the Subscription operation and other operations in accordance with the embodiment of the present invention are directly invoked by an EMS on another EMS. In Step 201, EMS1 directly invokes the Subscription operation to subscribe to the notification of configuration information synchronization recommended at EMS2.

In the Subscription operation, EMS 1 sends to EMS2 a subscription request carrying the identity of a border configuration object that may be changed and a notification type domain, where the notification type domain records the notification type subscribed to, e.g., it may be a notification of configuration information synchronization recommended (i.e. notifyCMSynchronizationRecommended) at the Kernel Configuration Management IRP (KernelCMIRP) in this embodiment. Upon receiving the subscription request from EMS1, EMS2 confirms the subscription, and records the identity of the border configuration object and the notification type.

The definition of the Subscription operation at the NotificationIRP is provided in 3GPP 32.302 and the definition of the notifyCMSynchronizationRecommended at the KernelCMIRP is provided in 3GPP 32.662, therefore the definitions will not be given herein.

In Step 202, after EMS2 confirms the subscription, Step 203 is performed upon the detection of any event that may cause change of the border configuration information, e.g., the update of part of the border configuration information.

In Step 203, EMS2 sends the notification of configuration information synchronization recommended to EMS1 to recommend EMS1 to synchronize the border configuration information corresponding to the changed border configuration information. The notification of configuration information synchronization recommended carries the identity of the changed border configuration information.

In Step 204, upon receiving the notification of configuration information synchronization recommended, EMS1 learns from the identity of the changed border configuration information that the border configuration information indicated by the identity is changed, and actively acquires the changed border configuration information from EMS2, i.e., EMS1 sends to EMS2 a request including the identity of the changed border configuration information to acquire the changed border configuration information, and EMS2 sends the contents of the changed border configuration information to EMS1 upon receiving the request.

In Step 204 above, an operation of getting Managed Object Attributes (getMOAttributes) at the Basic Configuration Management IRP (BasicCMIRP) can be adopted to initiate a querying request to EMS2 for the attributes of the object corresponding to the changed border configuration information to acquire the changed border configuration information at EMS2. The input parameters of the operation of getMOAttributes include the attributes of the object corresponding to the changed border configuration information. The output parameters of the operation of getMOAttributes include the changed border configuration information of EMS2, and EMS1 acquires the changed border configuration information of EMS2 from the output parameters. The definition of the operation of getMOAttributes at the BasicCMIRP is provided in 3GPP 32.602 and will not be given herein.

In addition, in Step 204 above, EMS1 may also adopt the Upload operation at the Bulk Configuration Management IRP (BulkCMIRP) to request EMS2 to create a file containing the changed border configuration information and send the file to a specified unique data file reference. After the Upload operation, EMS2 sends the file containing the changed border configuration information to EMS1 over the standard file transfer protocol and EMS1 acquires the changed border configuration information from the file. The definition of the Upload operation at the BulkCMIRP is provided in 3GPP 32.612 and will not be given herein.

In Step 205, EMS1 synchronizes the corresponding border configuration information in EMS1 according to the changed border configuration information of EMS2. That is, EMS1 modifies the corresponding border configuration information in EMS1 according a predetermined function relation between the border configuration information of EMS2 and the corresponding border configuration information in EMS1 so that the corresponding border configuration information in EMS1 and the changed border configuration information of EMS2 still comply with the predetermined function relation, thus ensuring the normal network operation. For example, when an EMS that manages a cell (UtranCell) receives a configuration change notification of a neighboring cell from another EMS, the EMS needs to updates the configuration information of the neighboring cell (ExternalUtranCell) in the EMS.

According to an embodiment of the present invention, the local sub-network EMS also actively acquires the border configuration information of a related sub-network EMS and synchronizes the corresponding border configuration information in the local sub-network EMS.

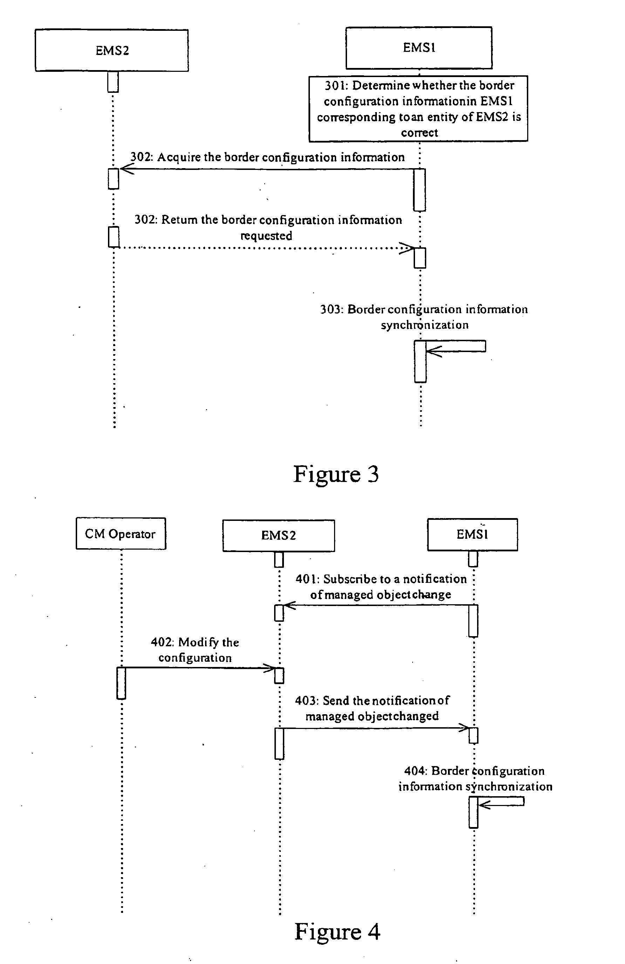

Figure 3 is a flow chart of the process in which the local sub-network EMS actively acquires the border configuration information and synchronizes the border configuration information in the local sub-network EMS according to an embodiment of the present invention. As shown in Figure 3, EMS1 is the local sub-network EMS, and EMS2 is an EMS of a sub-network related to the border configuration information of the local sub-network EMS, i.e. a related sub-network EMS. The process in Figure 3 is described below.

In Step 301, when EMS1 determines that EMS2 does not match corresponding border configuration information in EMS1, Step 302 is performed. For example, when EMS1 finds that communications with EMS2 on a link is failing all the time, EMS1 determines that the configuration information of the link in the two EMSs does not match with each other. The configuration information of the link is one kind of the border configuration information.

In Step 302, EMS1 actively acquires the specified border configuration information from EMS2. That is, EMS1 sends a request to EMS2 to acquire the specified border configuration information, and EMS2 sends the specified border configuration information to EMS1 upon receiving the request. The specified border configuration information is the border configuration information that does not match in Step 301.

In Step 302 above, the operation of getMOAttributes at the BasicCMIRP can be adopted by EMS1 to initiate a querying request to EMS2 for the attributes of the object corresponding to the changed border configuration information to acquire the specified border configuration information of EMS2. The input parameters of the operation of getMOAttributes include the attributes of the object corresponding to the changed border configuration information. The output parameters of the operation of getMOAttributes include the specified border configuration information of EMS2, and EMS1 acquires the changed border configuration information from the output parameters.

In addition, in Step 302 above, EMS may also adopt the Upload operation at the BulkCMIRP to request EMS2 to create a file containing the changed border configuration information and send the file to a specified unique data file reference. After the Upload operation, EMS2 sends the file containing the changed border configuration information to EMS1 over the standard file transfer protocol and EMS1 acquires the changed border configuration information from the file.

In Step 303, EMS1 synchronizes corresponding border configuration information in itself according to the changed border configuration information of EMS2. That is, EMS1 modifies corresponding border configuration information in itself according to a predetermined function relation between the border configuration information of EMS2 and the corresponding border configuration information in EMS1 such that the corresponding border configuration information in EMS1 and the changed border configuration information of EMS2 still comply with the predetermined function relation, thus ensuring the normal network operation.

According to an embodiment of the present invention, the local sub-network EMS passively receives a notification of border configuration information change from another sub-network EMS, and synchronizes the border configuration information in the local sub-network EMS accordingly. In this embodiment, the local sub-network EMS subscribes to a notification of border configuration object change at a related sub-network EMS. When the related sub-network EMS detects that an object managed by the related sub-network EMS is changed, and if the change of the object causes the change of the border configuration information, the related sub-network EMS sends a notification of attribute value change of border configuration object to the local sub-network EMS subscribing to the notification of border configuration object change. Upon receiving the notification of border configuration object change, the local sub-network EMS modifies corresponding border configuration information saved locally according to the changed border configuration information in the notification of border configuration object change so that the border configuration information in both EMSs is synchronized to assure the normal operation of the network.

Figure 4 is a flow chart of the process in which the local sub-network EMS passively receives the border configuration information and synchronizes the border configuration information of the local sub-network EMS according to an embodiment of the present invention. As shown in Figure 4, EMS1 is the local sub-network EMS, and EMS2 is an EMS of a sub-network related to the border configuration information of EMS1. The process in Figure 4 is described below.

In Step 401, EMS1 subscribes to the notification of border configuration object change at EMS2. The border configuration object refers to a network resource management object or a management domain control object managed by a sub-network EMS.

Step 401 is the basis of Steps 402 and 403.

In this embodiment, the Subscription operation at the Notification IRP class of the 3GPP northbound interface is adopted to perform Step 401. In Step 401, EMS1 directly invokes the Subscription operation to subscribe to the notification of the border configuration object change at EMS2. The notification of the border configuration object change includes all kinds of notifications that may cause the change of the border configuration object, e.g., object creation notification, object deletion notification and attribute value change notification, etc.

Specifically, in the Subscription operation, EMS1 sends to EMS2 a subscription request carrying the identity of the border configuration object and a notification type domain. The notification type domain records a notification type subscribed to, e.g., object creation, object deletion, attribute value change, etc. EMS2 confirms the subscription, records the identity of the border configuration object and the notification type subscribed to upon receiving the subscription request from EMS1.

The definition of the Subscription operation at the Notification IRP is provided in 3GPP 32.302 and will not be given herein.

In Step 402, upon confirming the subscription, EMS2 determines whether the border configuration information of EMS2 is changed. In other words, when an event that may cause the change of an object managed by EMS2 occurs in the network, EMS2 determines whether the border configuration object is changed, i.e., whether the border configuration information is changed. Step 403 is performed if the border configuration information is changed.

Generally, a Configuration Management (CM) operator may initiate through a control terminal of EMS2 an operation to change the configuration information of EMS2. The operation that may cause the change of the border configuration information includes the following four.

First, EMS2 sends to a network element managed by itself an instruction to create, delete or modify a border configuration object, and the information of the border configuration object is changed when the instruction is executed successfully.

Second, the local maintenance terminal of a network element managed by EMS2 sends an instruction to the network element to create, delete or modify a border configuration object. The network element reports to EMS2 if the instruction is executed successfully by the network element, and EMS2 determines that the border configuration object is changed.

Third, when the NMS manages, through the BasicCMIRP, EMS2 to create, delete or modify a border configuration object, the border configuration object will be changed. For example, the NMS requests EMS2 through an operation of setMOAttributes to modify one or more attribute values of a specified border configuration object; or the NMS requests EMS2 through an operation of createMO to create a specified border configuration object; or the NMS requests EMS2 through an operation of deleteMO to delete one or more specified border configuration objects. The definitions of the operations of setMOAttributes, createMO and deleteMO at the BasicCMIRP are provided in 3GPP 32.602 and will not be given herein.

Fourth, the border configuration object will be changed when the NMS manages bulk data in the EMS through the BulkCMIRP, for example, the NMS downloads a file of bulk data using Download operation, validates(O), pre-activates and activates the file downloaded. The definitions of the downloading, validating(O), pre-activating and activating at the BulkCMIRP are provided in 3GPP 32.612 and will not be given herein.

In Step 403, EMS2 sends to EMS1 the notification of border configuration object change, which carries the changed border configuration information.

In Step 403 above, EMS2 may send different notifications to EMS1 according to different reasons that cause the change of the border configuration object.

For example, with respect to the four operations described in Step 402, notifications at the KernelCMIRP are sent corresponding to the four operations. For example, notifyAttributeValueChange is sent when the attribute values of an object are modified, notifyObjectCreation is sent when an object is created, and notifyObjectDeletion js sent when an object is deleted. The definitions of the notifyAttributeValueChange, notifyObjectCreation and notifyObjectDeletion at the KernelCMIRP are provided in 3GPP 32.662 and will not be given herein.

In Step 404, upon receiving the notification of border configuration object change, EMS1 acquires the changed border configuration information and completes the synchronization of the border configuration information. That is, EMS1 modifies corresponding border configuration information in EMS1 according to the predetermined function relation between the border configuration information of EMS2 and the corresponding border configuration information in EMS 1. Thus, the corresponding border configuration information in EMS1 and the changed border configuration information of EMS2 still comply with the predetermined function relation.

According to the embodiments of the present invention, an operator usually adopts devices from different manufacturers in a communication network, and 3GPP standards are utilized to the greatest extent in order to meet the demand of exchanging the network management configuration information between EMSs. 3GPP is the most influential and irreplaceable international standard of 3G, and most of manufacturers produce devices comply with the 3GPP standards, therefore, according to the embodiments of the present invention, it is possible for EMSs from different manufacturers to exchange network management configuration information normally so as to simplify the management and integration of devices for the operator. The operator may choose devices from different manufacturers more flexibly and lower the purchase cost in constructing the network. Furthermore, most of the existing EMS network management products of different manufacturers are based on the 3GPP standards, hence the existing EMS network management products can be still utilized to the greatest extent and thus the development cost of network management products is reduced.

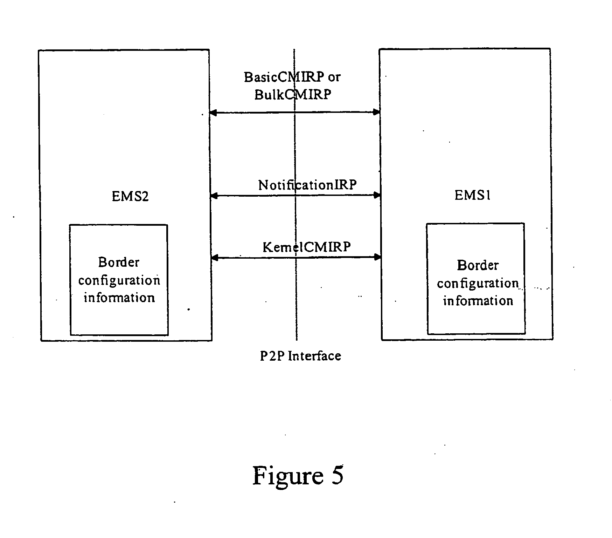

To sum up, the embodiments of the present invention provide a flow of communication interface, referred to as P2P interface herein, used for exchanging network management configuration information between EMSs. In the embodiments, some standard operations defined by 3GPP for some IRPs are adopted. Figure 5 is a schematic diagram illustrating the 3GPP IRP operation according to the embodiments of the present invention. As shown in Figure 5, the P2P interface between EMSs in accordance with the embodiments of the present invention may adopt 3GPP northbound interface specifications. BasicCMIRP, BulkCMIRP, NotificationIRP and KernelCMIRP of the northbound interface can be adopted directly in the flow of communication interface.

The devices invoking the operation functions of various IRPs of the 3GPP northbound interface are IRPManagers, and the devices realizing the operation functions are IRPAgents. Therefore, when an EMS is able to realize the operation functions of the 3GPP northbound interface, the EMS is configured with an IRPAgent. It is only needed to develop an IRPManager invoking the operation functions of the IRPs and add the IRPManager into the EMS so as to achieve the border configuration information synchronization through the P2P interface in accordance with the embodiments of the present invention.

Moreover, the embodiments of the present invention may not use operation specifications of the 3GPP northbound interface. When an EMS is unable to perform the operation functions of the 3GPP northbound interface, the EMS is configured with neither IRPAgent nor IRPManager, therefore, both IRPAgent and IRPManager which utilize the operation functions of the IRPs need to be developed and added into the EMS so as to achieve the border configuration information synchronization through the P2P interface in accordance with the embodiments of the present invention.

## Claims

1. A method for exchanging network management configuration information between Element Management Systems, hereinafter designated as EMSs, comprising:
acquiring, by a first sub-network EMS, network management configuration information of a second sub-network EMS, the second sub-network being related to the first sub-network EMS sent by the second sub-network EMS after the network management configuration information of the second sub-network EMS is changed (204, 302, 403);
synchronizing, by the first sub-network EMS, corresponding network management configuration information in the first sub-network EMS according to the network management configuration information of the second sub-network EMS upon receiving the network management configuration information of the second sub-network EMS (205, 303, 404).

2. The method of claim 1, further comprising:
learning, by the first sub-network EMS, whether the network management configuration information of the second sub-network EMS is changed, and initiating a request for acquiring specified network management configuration information to the second sub-network EMS if the network management configuration information of the second sub-network EMS is changed; wherein
the procedure of acquiring comprises: acquiring the specified network management configuration information.

3. The method of claim 2, wherein the procedure of learning comprises:
determining that the network management configuration information of the second sub-network EMS is changed if the first sub-network EMS determines that the corresponding network management configuration information in the first sub-network EMS does not match the network management configuration information of the second sub-network EMS.

4. The method of claim 2, further comprising:
subscribing, by the first sub-network EMS, to a notification of network management configuration information synchronization recommended at the second sub-network EMS (201); and
confirming, by the second sub-network EMS, the subscription (202); wherein
the procedure of learning comprises:
sending, by the second sub-network EMS, to the first sub-network EMS the notification of the network management configuration information synchronization recommended upon detecting an event that makes the network management configuration information of the second sub-network EMS changed (202, 203), wherein the notification carries an identity of the network management configuration information of the second sub-network EMS; and
determining, by the first sub-network EMS, that network management configuration information indicated by the identity carried in the notification received is changed (204).

5. The method of claim 4, wherein the procedure of subscribing is a subscription operation ofNotification Integrated Reference Point, hereinafter designated as IRP, of 3GPP northbound interface; and
the notification of the network management configuration information synchronization recommended is a notification of configuration information synchronization recommended at a kernel configuration management IRP of the 3GPP northbound interface.

6. The method of claim 2, wherein the procedure of initiating comprises:
invoking an operation of getting managed object attributes at a basic configuration management Integrated Reference Point, hereinafter designated as IRP, of 3GPP northbound interface to send a querying request to the second sub-network EMS for an attribute of an object corresponding to the specified network management configuration information; and
the procedure of acquiring the specified network management configuration information comprises:
acquiring the specified network management configuration information from an output parameter of the operation of getting managed object attributes.

7. The method of claim 2, wherein the procedure of initiating comprises:
invoking, by the first sub-network EMS, an upload operation at a bulk configuration management Integrated Reference Point, hereinafter designated as IRP, of 3GPP northbound interface to request the second sub-network EMS to create a file containing the specified network management configuration information;
receiving, by the first sub-network EMS, the file sent by the second sub-network EMS through a file transfer protocol upon creating by the second sub-network EMS the file containing the specified network management configuration information; and
the procedure of acquiring the specified network management configuration information comprises:
acquiring, by the first sub-network EMS, the specified network management configuration information from the file.

8. The method of claim 1, further comprising:
determining, by the second sub-network EMS, whether the network management configuration information of the second sub-network EMS is changed (402), and
sending the network management configuration information of the second sub-network EMS if the network management configuration information of the second sub-network EMS is changed (403).

9. The method of claim 8, further comprising:
subscribing, by the first sub-network EMS, to a notification of border configuration object change at the second sub-network EMS (401); wherein
the procedure of determining comprises (402):
determining whether an operation that makes a border configuration object changed is performed, and determining that the network management configuration information of the second sub-network EMS is changed if the operation is performed; and
the procedure of sending (403) comprises:
sending the network management configuration information of the second sub-network EMS through the notification of the border configuration object change.

10. The method of claim 9, wherein the procedure of subscribing is a subscription operation of Notification IRP of 3GPP northbound interface.

11. The method of claim 9, wherein the operation that makes the border configuration object changed comprises:
modifying, by the second sub-network EMS, configuration of the border configuration object; or
modifying, by the second sub-network EMS, the border configuration object through a basic configuration management IRP of 3GPP northbound interface; or
modifying the border configuration object of the second sub-network EMS through a bulk configuration management IRP of 3GPP northbound interface.

12. The method of claim 9, wherein the notification of the border configuration object change is a notification defined by a kernel configuration management IRP of 3GPP northbound interface.

13. The method of claim 1, wherein the procedure of synchronizing (205, 303, 404) comprises:
modifying specified network management configuration information in the first sub-network EMS according to a predetermined function relation between the network management configuration information of the second sub-network EMS and the corresponding network management configuration information in the first sub-network EMS to make the specified network management configuration information in the first sub-network EMS and the network management configuration information of the second sub-network EMS keep complying with the predetermined function relation.

14. The method of any of claim 1 to claim 13, wherein the network management configuration information is border configuration information.

15. A system comprising two Element Management Systems, hereinafter designated as EMS of related subnetworks adapted to exchange network management configuration information,
a second EMS being adapted to send network management configuration information of the second sub-network EMS, the second sub-network being related to the first sub-network EMS, after the network management configuration information of the second sub-network EMS is changed (204, 302, 403);
and a first EMS comprising
a first module adapted to acquire network management configuration information of the second EMS of a related sub-network after the network management configuration information of the EMS of the related sub-network is changed; and
a second module adapted to synchronize corresponding network management configuration information in the first EMS of the sub-network according to the network management configuration information of the second EMS of the related subnetwork (205, 303, 404) upon receiving the network management configuration information of the second sub-network EMS.

16. The system of claim 15, the first EMS further comprising:
a third module adapted to learn whether the network management configuration information of the EMS the related sub-network is changed, and
a fourth module adapted to initiate a request for acquiring specified network management configuration information to the EMS of the related sub-network if the network management configuration information of the EMS of the related sub-network is changed.

17. The system of claim 15, the first EMS further comprising:
a fifth module adapted to subscribe to a notification of border configuration object change at the EMS of the related sub-network; wherein
the first module acquires the network management configuration information of the EMS of the related sub-network through the notification.

## Patentansprüche

1. Verfahren zum Austauschen von Netzverwaltungs-Konfigurationsinformationen zwischen Elementverwaltungssystemen, die im Folgenden als EMS bezeichnet werden, mit den folgenden Schritten:
ein erstes Subnetz-EMS beschafft Netzverwaltungs-Konfigurationsinformationen eines zweiten Subnetz-EMS, wobei das zweite Subnetz mit dem ersten Subnetz-EMS in Beziehung steht, die durch das zweite Subnetz-EMS gesendet werden, nachdem die Netzverwaltungs-Konfigurationsinformationen des zweiten Subnetz-EMS geändert werden (204, 302, 403);
das erste Subnetz-EMS synchronisiert entsprechende Netzverwaltungs-Konfigurationsinformationen in dem ersten Subnetz-EMS gemäß den Netzverwaltungs-Konfigurationsinformationen des zweiten Subnetz-EMS beim Empfang der Netzverwaltungs-Konfigurationsinformationen des zweiten Subnetz-EMS (205, 303, 404).

2. Verfahren nach Anspruch 1, ferner mit den folgenden Schritten:
das erste Subnetz-EMS erfährt, ob die Netzverwaltungs-Konfigurationsinformationen des zweiten Subnetz-EMS geändert sind, und es wird eine Anforderung zum Beschaffen von spezifizierten Netzverwaltungs-Konfigurationsinformationen zu dem zweiten Subnetz-EMS eingeleitet, wenn die Netzverwaltungs-Konfigurationsinformationen des zweiten Subnetz-EMS geändert sind; wobei die Prozedur des Beschaffens Folgendes umfasst: Beschaffen der spezifizierten Netzverwaltungs-Konfigurationsinformationen.

3. Verfahren nach Anspruch 2, wobei die Prozedur des Erfahrens Folgendes umfasst:
Bestimmen, dass die Netzverwaltungs-Konfigurationsinformationen des zweiten Subnetz-EMS geändert sind, wenn das erste Subnetz-EMS bestimmt, dass die entsprechenden Netzverwaltungs-Konfigurationsinformationen in dem ersten Subnetz-EMS nicht mit den Netzverwaltungs-Konfigurationsinformationen des zweiten Subnetz-EMS übereinstimmen.

4. Verfahren nach Anspruch 2, ferner mit den folgenden Schritten:
das erste Subnetz-EMS subskribiert eine Benachrichtigung über Netzverwaltungs-Konfigurationsinformationssynchronisation, die in dem zweiten Subnetz-EMS (201) empfohlen wird; und
das zweite Subnetz-EMS bestätigt die Subskription (202); wobei die Prozedur des Erfahrens Folgendes umfasst:
das zweite Subnetz-EMS sendet zu dem ersten Subnetz-EMS die Benachrichtigung über die Netzverwaltungs-Konfigurationsinformationssynchronisation, die empfohlen wird, wenn ein Ereignis detektiert wird, das bewirkt, dass die Netzverwaltungs-Konfigurationsinformationen des zweiten Subnetz-EMS geändert werden (202, 203), wobei die Benachrichtigung eine Identität der Netzverwaltungs-Konfigurationsinformationen des zweiten Subnetz-EMS führt; und
das erste Subnetz-EMS bestimmt, dass durch die in der empfangenen Benachrichtigung geführte Identität angegebene Netzverwaltungs-Konfigurationsinformationen geändert sind (204).

5. Verfahren nach Anspruch 4, wobei die Prozedur des Subskribierens eine Subskriptionsoperation des im Folgenden als IRP bezeichneten Notification Integrated Reference Point der 3GPP-Northbound-Schnittstelle ist; und
die Benachrichtigung über die Netzverwaltungs-Konfigurationsinformationssynchronisation, die empfohlen wird, eine Benachrichtigung über Konfigurationsinformationssynchronisation ist, die in einem Kernel-Konfigurationsverwaltungs-IRP der 3GPP-Northbound-Schnittstelle empfohlen wird.

6. Verfahren nach Anspruch 2, wobei die Prozedur des Einleitens Folgendes umfasst:
Aufrufen einer Operation des Erhaltens von Attributen verwalteter Objekte in einem im Folgenden als IRP bezeichneten Integrated Reference Point der grundlegenden Konfigurationsverwaltung der 3GPP-Northbound-Schnittstelle zum Senden einer anfragenden Anforderung zu dem zweiten Subnetz-EMS eines Attributs eines Objekts, das den spezifizierten Netzverwaltungs-Konfigurationsinformationen entspricht; und
die Prozedur des Beschaffens der spezifizierten Netzverwaltungs-Konfigurationsinformationen Folgendes umfasst:
Beschaffen der spezifizierten Netzverwaltungs-Konfigurationsinformationen von einem Ausgangsparameter der Operation des Erhaltens von Attributen verwalteter Objekte.

7. Verfahren nach Anspruch 2, wobei die Prozedur des Einleitens Folgendes umfasst:
das erste Subnetz-EMS ruft eine Upload-Operation in einem im Folgenden als IRP bezeichneten Integrated Reference Point der Bulk-Konfigurationsverwaltung der 3GPP-Northbound-Schnittstelle auf, um von dem zweiten Subnetz-EMS anzufordern, eine Datei zu erzeugen, die die spezifizierten Netzverwaltungs-Konfigurationsinformationen enthält;
das erste Subnetz-EMS empfängt die durch das zweite Subnetz-EMS gesendete Datei durch ein Dateitransferprotokoll nach dem Erzeugen der Datei, die die spezifizierten Netzverwaltungs-Konfigurationsinformationen enthält, durch das zweite Subnetz-EMS; und
die Prozedur des Beschaffens der spezifizierten Netzverwaltungs-Konfigurationsinformationen Folgendes umfasst:
das erste Subnetz-EMS beschafft die spezifizierten Netzverwaltungs-Konfigurationsinformationen aus der Datei.

8. Verfahren nach Anspruch 1, ferner mit den folgenden Schritten:
das zweite Subnetz-EMS bestimmt, ob die Netzverwaltungs-Konfigurationsinformationen des zweiten Subnetz-EMS geändert sind (402), und
die Netzverwaltungs-Konfigurationsinformationen des zweiten Subnetz-EMS werden gesendet, wenn die Netzverwaltungs-Konfigurationsinformationen des zweiten Subnetz-EMS geändert sind (403).

9. Verfahren nach Anspruch 8, ferner mit den folgenden Schritten:
das erste Subnetz-EMS subskribiert eine Benachrichtigung über Grenzkonfigurationsobjektänderung in dem zweiten Subnetz-EMS (401); wobei die Prozedur des Bestimmens Folgendes umfasst (402):
Bestimmen, ob eine Operation, die bewirkt, dass ein Grenzkonfigurationsobjekt geändert wird, ausgeführt wird, und Bestimmen, dass die Netzverwaltungs-Konfigurationsinformationen des zweiten Subnetz-EMS geändert werden, wenn die Operation ausgeführt wird; und
die Prozedur des Sendens (403) Folgendes umfasst:
Senden der Netzverwaltungs-Konfigurationsinformationen des zweiten Subnetz-EMS durch die Benachrichtigung über die Grenzkonfigurationsobjektänderung.

10. Verfahren nach Anspruch 9, wobei die Prozedur des Subskribierens eine Subskriptionsoperation des Benachrichtigungs-IRP der 3GPP-Northbound-Schnittstelle ist.

11. Verfahren nach Anspruch 9, wobei die Operation, die bewirkt, dass das Grenzkonfigurationsobjekt geändert wird, Folgendes umfasst:
das zweite Subnetz-EMS modifiziert die Konfiguration des Grenzkonfigurationsobjekts; oder
das zweite Subnetz-EMS modifiziert das Grenzkonfigurationsobjekt durch einen IRP der grundlegenden Konfigurationsverwaltung der 3-GPP-Northbound-Schnittstelle; oder
das Grenzkonfigurationsobjekt des zweiten Subnetz-EMS wird durch einen Bulk-Konfigurationsverwaltungs-IRP der 3-GPP-Northbound-Schnittstelle modifiziert.

12. Verfahren nach Anspruch 9, wobei die Benachrichtigung über die Grenzkonfigurationsobjektänderung eine Benachrichtigung ist, die durch einen Kernel-Konfigurationsverwaltungs-IRP der 3-GPP-Northbound-Schnittstelle definiert wird.

13. Verfahren nach Anspruch 1, wobei die Prozedur des Synchronisierens (205, 303, 404) Folgendes umfasst:
Modifizieren von spezifizierten Netzverwaltungs-Konfigurationsinformationen in dem ersten Subnetz-EMS gemäß einer vorbestimmten Funktionsbeziehung zwischen den Netzverwaltungs-Konfigurationsinformationen des zweiten Subnetz-EMS und
den entsprechenden Netzverwaltungs-Konfigurationsinformationen in dem ersten Subnetz-EMS, um zu bewirken, dass die spezifizierten Netzverwaltungs-Konfigurationsinformationen in dem ersten Subnetz-EMS und die Netzverwaltungs-Konfigurationsinformationen des zweiten Subnetz-EMS weiter die vorbestimmte Funktionsbeziehung einhalten.

14. Verfahren nach einem der Ansprüche 1 bis Anspruch 13, wobei die Netzverwaltungs-Konfigurationsinformationen Grenzkonfigurationsinformationen sind.

15. System, umfassend zwei im Folgenden als EMS bezeichnete Elementverwaltungssysteme miteinander in Beziehung stehender Subnetze, die dafür ausgelegt sind, Netzverwaltungs-Konfigurationsinformationen auszutauschen,
wobei ein zweites EMS dafür ausgelegt ist, Netzverwaltungs-Konfigurationsinformationen des zweiten Subnetz-EMS zu senden, wobei das zweite Subnetz mit dem ersten Subnetz-EMS in Beziehung steht, nachdem die Netzverwaltungs-Konfigurationsinformationen des zweiten Subnetz-EMS geändert werden (204, 302, 403);
und wobei ein erstes EMS Folgendes umfasst:
ein erstes Modul, das dafür ausgelegt ist, Netzverwaltungs-Konfigurationsinformationen des zweiten EMS eines damit in Beziehung stehenden Subnetzes zu beschaffen, nachdem die Netzverwaltungs-Konfigurationsinformationen des EMS des damit in Beziehung stehenden Subnetzes geändert sind; und
ein zweites Modul, das dafür ausgelegt ist, entsprechende Netzverwaltungs-Konfigurationsinformationen in dem ersten EMS des Subnetzes auf den Empfang der Netzverwaltungs-Konfigurationsinformationen des zweiten Subnetz-EMS hin gemäß den Netzverwaltungs-Konfigurationsinformationen des zweiten EMS des damit in Beziehung stehenden Subnetzes zu synchronisieren (205, 303, 404).

16. System nach Anspruch 15, wobei das erste EMS ferner Folgendes umfasst:
ein drittes Modul, das dafür ausgelegt ist, zu erfahren, ob die Netzverwaltungs-Konfigurationsinformationen des EMS des damit in Beziehung stehenden Subnetzes geändert sind, und
ein viertes Modul, das dafür ausgelegt ist, eine Anforderung zum Beschaffen spezifizierter Netzverwaltungs-Konfigurationsinformationen zu dem EMS des damit in Beziehung stehenden Subnetzes einzuleiten, wenn die Netzverwaltungs-Konfigurationsinformationen des EMS des damit in Beziehung stehenden Subnetzes geändert sind.

17. System nach Anspruch 15, wobei das erste EMS ferner Folgendes umfasst:
ein fünftes Modul, das dafür ausgelegt ist, eine Benachrichtigung über Grenzkonfigurationsobjektänderung in dem EMS des damit in Beziehung stehenden Subnetzes zu subskribieren; wobei
das erste Modul die Netzverwaltungs-Konfigurationsinformationen des EMS des damit in Beziehung stehenden Subnetzes durch die Benachrichtigung beschafft.

## Revendications

1. Procédé d'échange d'informations de configuration de gestion de réseau entre des Systèmes de Gestion d'Eléments, désignés ci-après EMS, comprenant :
l'acquisition, par un premier EMS de sous-réseau, d'informations de configuration de gestion de réseau d'un second EMS de sous-réseau, le second EMS de sous-réseau étant apparenté au premier EMS de sous-réseau, envoyées par le second EMS de sous-réseau après que les informations de configuration de gestion de réseau du second EMS de sous-réseau ont changé (204, 302, 403) ;
la synchronisation, par le premier EMS de sous-réseau, d'informations de configuration de gestion de réseau correspondantes dans le premier EMS de sous-réseau en fonction des informations de configuration de gestion de réseau du second EMS de sous-réseau à la réception des informations de configuration de gestion de réseau du second EMS de sous-réseau (205, 303, 404).

2. Procédé selon la revendication 1, comprenant en outre :
l'apprentissage, par le premier EMS de sous-réseau, si les informations de configuration de gestion de réseau du second EMS de sous-réseau ont changé ou non,
et le lancement d'une requête d'acquisition d'informations de configuration de gestion de réseau spécifiées auprès du second EMS de sous-réseau si les informations de configuration de gestion de réseau du second EMS de sous-réseau ont changé ; dans lequel
la procédure d'acquisition comprend : l'acquisition des informations de configuration de gestion de réseau spécifiées.

3. Procédé selon la revendication 2, dans lequel la procédure d'apprentissage comprend :
la détermination que les informations de configuration de gestion de réseau du second EMS de sous-réseau ont changé si le premier EMS de sous-réseau détermine que les informations de configuration de gestion de réseau correspondantes dans le premier EMS de sous-réseau ne correspondent pas aux informations de configuration de gestion de réseau du second EMS de sous-réseau.

4. Procédé selon la revendication 2, comprenant en outre :
la souscription, par le premier EMS de sous-réseau, à une notification de synchronisation d'informations de configuration de gestion de réseau recommandée au niveau du second EMS de sous-réseau (201) ; et
la confirmation, par le second EMS de sous-réseau, de la souscription (202) ; dans lequel
la procédure d'apprentissage comprend :
l'envoi, par le second EMS de sous-réseau, au premier EMS de sous-réseau, de la notification de la synchronisation d'informations de configuration de gestion de réseau recommandée à la détection d'un événement qui entraîne un changement des informations de configuration de gestion de réseau du second EMS de sous-réseau (202, 203), la notification portant une identité des informations de configuration de gestion de réseau du second EMS de sous-réseau ; et
la détermination, par le premier EMS de sous-réseau, que les informations de configuration de gestion de réseau indiquées par l'identité portée dans la notification reçue ont changé (204).

5. Procédé selon la revendication 4, dans lequel la procédure de souscription est une opération de souscription de Point de Référence Intégré de Notification, désigné ci-après IRP, d'une interface amont 3GPP ; et
la notification de la synchronisation d'informations de configuration de gestion de réseau recommandée est une notification de synchronisation d'informations de configuration recommandée au niveau d'un IRP de gestion de configuration de noyau de l'interface amont 3GPP.

6. Procédé selon la revendication 2, dans lequel la procédure de lancement comprend :
l'appel d'une opération d'obtention d'attributs d'objets gérés au niveau d'un Point de Référence Intégré de gestion de configuration élémentaire, désigné ci-après IRP,
d'une interface amont 3GPP pour envoyer une requête d'interrogation au second EMS de sous-réseau à la recherche d'un attribut d'un objet correspondant aux informations de configuration de gestion de réseau spécifiées ; et
la procédure d'acquisition des informations de configuration de gestion de réseau spécifiées comprend :
l'acquisition des informations de configuration de gestion de réseau spécifiées à partir d'un paramètre de sortie de l'opération d'obtention d'attributs d'objets gérés.

7. Procédé selon la revendication 2, dans lequel la procédure de lancement comprend :
l'appel, par le premier EMS de sous-réseau, d'une opération de chargement amont au niveau d'un Point de Référence Intégré de gestion de configuration global, désigné ci-après IRP, d'une interface amont 3GPP pour demander au second EMS de sous-réseau de créer un fichier contenant les informations de configuration de gestion de réseau spécifiées ;
la réception, par le premier EMS de sous-réseau, du fichier envoyé par le second EMS de sous-réseau par le biais d'un protocole de transfert de fichier à la création par le second EMS de sous-réseau du fichier contenant les informations de configuration de gestion de réseau spécifiées ; et
la procédure d'acquisition des informations de configuration de gestion de réseau spécifiées comprend :
l'acquisition, par le premier EMS de sous-réseau, des informations de configuration de gestion de réseau spécifiées à partir du fichier.

8. Procédé selon la revendication 1, comprenant en outre :
la détermination, par le second EMS de sous-réseau, si les informations de configuration de gestion de réseau du second EMS de sous-réseau ont changé ou non (402), et
l'envoi des informations de configuration de gestion de réseau du second EMS de sous-réseau si les informations de configuration de gestion de réseau du second EMS de sous-réseau ont changé (403).

9. Procédé selon la revendication 8, comprenant en outre :
la souscription, par le premier EMS de sous-réseau, à une notification de changement d'objet de configuration de frontière au niveau du second EMS de sous-réseau (401) ;
dans lequel
la procédure de détermination comprend (402) :
la détermination si une opération entraînant un changement de l'objet de configuration de frontière est effectuée ou non, et la détermination que les informations de configuration de gestion de réseau du second EMS de sous-réseau ont changé si l'opération est effectuée ; et
la procédure d'envoi (403) comprend :
l'envoi des informations de configuration de gestion de réseau du second EMS de sous-réseau par le biais de la notification du changement d'objet de configuration de frontière.

10. Procédé selon la revendication 9, dans lequel la procédure de souscription est une opération de souscription d'IRP de Notification d'une interface amont 3GPP.

11. Procédé selon la revendication 9, dans lequel l'opération qui entraîne un changement de l'objet de configuration de frontière comprend :
la modification, par le second EMS de sous-réseau, de la configuration de l'objet de configuration de frontière ; ou
la modification, par le second EMS de sous-réseau, de l'objet de configuration de frontière par le biais d'un IRP de gestion de configuration élémentaire d'une interface amont 3GPP ; ou
la modification de l'objet de configuration de frontière du second EMS de sous-réseau par le biais d'un IRP de gestion de configuration global d'une interface amont 3GPP.

12. Procédé selon la revendication 9, dans lequel la notification de changement d'objet de configuration de frontière est une notification définie par un IRP de gestion de configuration de noyau d'une interface amont 3GPP.

13. Procédé selon la revendication 1, dans lequel la procédure de synchronisation (205, 303, 404) comprend :
la modification d'informations de configuration de gestion de réseau spécifiées dans le premier EMS de sous-réseau en fonction d'une relation de fonction prédéterminée entre les informations de configuration de gestion de réseau du second EMS de sous-réseau et les informations de configuration de gestion de réseau correspondantes dans le premier EMS de sous-réseau afin de faire en sorte que les informations de configuration de gestion de réseau spécifiées dans le premier EMS de sous-réseau et les informations de configuration de gestion de réseau du second EMS de sous-réseau continuent de satisfaire la relation de fonction prédéterminée.

14. Procédé selon l'une quelconque des revendications 1 à 13, dans lequel les informations de configuration de gestion de réseau sont des informations de configuration de frontière.

15. Système comprenant deux Systèmes de Gestion d'Eléments, désignés ci-après EMS de sous-réseaux apparentés adaptés pour échanger des informations de configuration de gestion de réseau,
un second EMS étant adapté pour envoyer des informations de configuration de gestion de réseau du second EMS de sous-réseau, le second sous-réseau étant apparenté au premier EMS de sous-réseau, après que les informations de configuration de gestion de réseau du second EMS de sous-réseau ont changé (204, 302, 403) ;
et un premier EMS comprenant
un premier module adapté pour acquérir des informations de configuration de gestion de réseau du second EMS d'un sous-réseau apparenté après que les informations de configuration de gestion de réseau de l'EMS du sous-réseau apparenté ont changé ; et un deuxième module adapté pour synchroniser des informations de configuration de gestion de réseau correspondantes dans le premier EMS du sous-réseau en fonction des informations de configuration de gestion de réseau du second EMS du sous-réseau apparenté (205, 303, 404) à la réception des informations de configuration de gestion de réseau du second EMS de sous-réseau.

16. Système selon la revendication 15, le premier EMS comprenant en outre :
un troisième module adapté pour apprendre si les informations de configuration de gestion de réseau de l'EMS du sous-réseau apparenté ont changé ou non, et
un quatrième module adapté pour lancer une requête d'acquisition d'informations de configuration de gestion de réseau spécifiées auprès de l'EMS du sous-réseau apparenté si les informations de configuration de gestion de réseau de l'EMS du sous-réseau apparenté ont changé.

17. Système selon la revendication 15, le premier EMS comprenant en outre :
un cinquième module adapté pour souscrire à une notification de changement d'objet de configuration de frontière au niveau de l'EMS du sous-réseau apparenté ; dans lequel
le premier module acquiert les informations de configuration de gestion de réseau de l'EMS du sous-réseau apparenté par le biais de la notification.
